# EUROPÄISCHE PATENTSCHRIFT

(11) **EP 2 857 700 B1**
(45) Veröffentlichungstag und Bekanntmachung des Hinweises auf die Patenterteilung: **06.07.2016**
(21) Anmeldenummer: 14186963.6
(22) Anmeldetag: 30.09.2014
(51) Int. Cl.: F16B 37/04

(54) **Verfahren zum Befestigen eines ersten Bauteils an einem zweiten Bauteil eines Kraftwagens sowie Befestigungsanordnung eines ersten Bauteils an einem zweiten Bauteil eines Kraftwagens**
Method for fixing a first component to a second component of a motor vehicle, and fixing assembly of a first component to a second component of a motor vehicle
Procédé de fixation d'un premier composant sur un deuxième composant d'un véhicule automobile, ainsi que système de fixation d'un premier composant sur un deuxième composant d'un véhicule automobile

(30) Priorität: 01.10.2013 DE 102013219957
(43) Veröffentlichungstag der Anmeldung: 08.04.2015
(73) Patentinhaber: Bayerische Motoren Werke Aktiengesellschaft, 80809 München (DE)
(72) Erfinder: Aigner, Johann, 85375 Neufahrn (DE)

(56) Entgegenhaltungen:
- US-A- 4 610 588

## Beschreibung

Die Erfindung betrifft ein Verfahren zum Befestigen eines ersten Bauteils an einem zweiten Bauteil eines Kraftwagens gemäß dem Oberbegriff von Patentanspruch 1 sowie eine Befestigungsanordnung eines ersten Bauteils an einem zweiten Bauteil eines Kraftwagens gemäß dem Oberbegriff von Patentanspruch 4.

Ein solches Verfahren und eine solche Befestigungsanordnung sind beispielsweise der EP 1 138 962 A2 als bekannt zu entnehmen. Bei dem Verfahren wird ein erstes Bauteil an einem zweiten Bauteil eines Kraftwagens mittels einer Befestigungseinrichtung befestigt. Die Befestigungseinrichtung umfasst ein erstes Schraubelement sowie ein zweites Schraubelement. Das erste Schraubelement weist ein Außengewinde auf, wobei das zweite Schraubelement ein Innengewinde sowie ein Rastelement aufweist.

Die Befestigung des ersten Bauteils an dem zweiten Bauteil erfolgt derart, dass das zweite Schraubelement durch Einschrauben des Außengewindes in das korrespondierende Innengewinde mittels des ersten Schraubelements am zweiten Bauteil befestigt wird. Ferner wird das erste Bauelement mittels des Rastelements des zweiten Schraubelements mit dem zweiten Schraubelement verrastet. Dadurch ist das zweite Bauteil über das Rastelement mit dem zweiten Schraubelement verbunden. Da das zweite Schraubelement über das erste Schraubelement am zweiten Bauteil gehalten ist, ist das erste Bauteil über das Rastelement und die Schraubelemente am zweiten Bauteil befestigt. Im Rahmen der Befestigungsanordnung ist somit das erste Bauteil am zweiten Bauteil in einer Endmontagestellung mittels der wenigstens einen Befestigungseinrichtung gehalten.

Die EP 1 087 150 A2 offenbart ein Rastelement, welches mit einem ersten Bauteil verrastet ist. Das Rastelement weist ein Innengewinde auf und ist mit einem Schraubelement verschraubt. Mittels des Schraubelements und des Rastelements ist dabei ein zweites Bauteil am ersten Bauteil befestigt.

Aus der US 2002/0100146 A1 ist ein Rastelement bekannt. Rastelemente werden üblicherweise auch als Clipse oder Clipselemente bezeichnet. Ein solcher Clips kann auf einfache Weise mit einem korrespondierenden Bauteil verbunden werden, indem der Clips mit dem korrespondierenden Bauteil verclipst beziehungsweise in das korrespondierende Bauteil eingerastet wird.

Der DE 10 2011 009 536 A1 ist ein Spannelement als bekannt zu entnehmen. Das Spannelement wirkt mit einer mehreckigen Gewindemutter zusammen. Dabei ist es vorgesehen, dass die Gewindemutter verdrehsicher in einem Federbügel gehalten ist, der mit dem Spannelement verrastet ist.

Die DE 20 2007 019 044 U1 offenbart eine Befestigungsvorrichtung zum Einfügen in ein Trägerteil mit einer Deckplatte und mit zwei an gegenüberliegenden Randseiten an der Deckplatte angesetzten sowie auf einer Seite der Deckplatte einander gegenüberliegenden Klammerarmen. Jeder Klammerarm weist einen dem anderen Klammerarm zugewandten Innenschenkel und einen dem anderen Klammerarm abgewandten Außenschenkel auf, der mit einem Anbindungsabschnitt mit dem von der Deckplatte abgewandten Ende des Innenschenkels verbunden ist und an seinem der Deckplatte zugewandten Ende über eine Abstützstruktur verfügt.

Schließlich offenbart die DE 199 04 534 A1 eine Vorrichtung zum Befestigen eines Anbauteils auf einer nachgiebigen Auflagefläche eines harten Trägers mittels einer Schraubverbindung, bestehend aus ineinandergreifenden Schrauben- und Muttergewinden. Dabei ist es vorgesehen, dass am harten Träger ein Abstandhalter, an welchem das Muttergewinde vorgesehen ist, abstützbar ist, und dass der Abstandhalter eine Anlagefläche für das Anbauteil um eine Schraubenachse bildet, wobei die Anlagefläche einen bestimmten axialen Abstand von dem Träger aufweist.

Ferner ist es aus dem Serienfahrzeugbau bekannt, erste Bauteile an zweiten Bauteilen, beispielsweise in Form von Karosserieteilen, mittels wenigstens einer Schraube und einer korrespondierenden Mutter oder mittels Drehverschlüssen zu befestigen. Üblicherweise ist eine solche Mutter als Einschweiß- oder Einpressmutter ausgebildet und fest mit dem Karosserieteil verbunden. Alternativ kann die Mutter als Einsteckmutter ausgebildet sein, welche separat montiert werden muss. Die Verwendung von Schrauben und Muttern hat den Nachteil, dass die Mutter entweder aufwendig dauerhaft über einen entsprechenden Prozess in das Karosserieteil eingebracht oder in einem separaten Arbeitsprozess an dem Karosserieteil befestigt werden muss. Dauerhaft mit dem Karosserieteil verbundene Muttern, das heißt nicht-zerstörungsfrei lösbar mit dem Karosserieteil verbundene Muttern können bei einer Beschädigung nicht ausgetauscht werden. Drehverschlussverbindungen benötigen eine kombinierte Druck- und Drehmontage, was sich insbesondere bei Bauteilen, die mit einem elastischen Dichtelement als Zwischenlage versehen sind, als schwierig und nicht prozesssicher erwiesen hat.

Es ist daher Aufgabe der vorliegenden Erfindung, ein Verfahren sowie eine Befestigungsanordnung der eingangs genannten Art derart weiterzuentwickeln, dass sich eine besonders einfache Montage des ersten Bauteils am zweiten Bauteil realisieren lässt.

Diese Aufgabe wird durch ein Verfahren mit den Merkmalen des Patentanspruchs 1 sowie durch eine Befestigungsanordnung mit den Merkmalen des Patentanspruchs 4 gelöst. Vorteilhafte Ausgestaltungen mit zweckmäßigen und nicht-trivialen Weiterbildungen der Erfindung sind in den übrigen Ansprüchen angegeben.

Um ein Verfahren der im Oberbegriff des Patentanspruchs 1 angegebenen Art zu schaffen, mittels welchem sich eine besonders einfache, zeit- und kostengünstige Montage beziehungsweise Befestigung des ersten Bauteils am zweiten Bauteil realisieren lässt, ist es erfindungsgemäß vorgesehen, dass das zweite Schraubelement vor dem Verrasten des ersten Bauteils an dem zweiten Bauteil relativ zu diesem verschiebbar und verdrehgesichert mittels des ersten Schraubelements vormontiert wird. Mit anderen Worten wird das zweite Schraubelement an dem zweiten Bauteil vormontiert, bevor das erste Bauteil mit dem zweiten Schraubelement verrastet wird, wobei das zweite Schraubelement in diesem vormontierten Zustand relativ zum zweiten Bauteil verschiebbar, jedoch relativ zum zweiten Bauteil verdrehgesichert ist. Dies bedeutet, dass das zweite Schraubelement zwar relativ zum zweiten Bauteil verschoben, jedoch nicht gedreht werden kann.

Dadurch ist es beispielsweise möglich, das zweite Bauteil zusammen mit der am zweiten Bauteil vormontierten Befestigungseinrichtung an einen Montageplatz anzuliefern. Im Anschluss daran ist es möglich, im Rahmen der Montage des ersten Bauteils am zweiten Bauteil das erste Bauteil mit dem zweiten Schraubelement über die Verschiebbarkeit des zweiten Schraubelements zu verbinden, das heißt vorzufixieren, indem das erste Bauteil mit dem zweiten Schraubelement über dessen Rastelement verrastet wird.

In diesem vorfixierten Zustand ist das erste Bauteil zwar am zweiten Bauteil gehalten, jedoch ohne dass die Bauteile miteinander verspannt sind beziehungsweise sich gegenseitig mit einer Kraft beaufschlagen. Durch diese Vorfixierung ist zwar eine Bewegung des ersten Bauteils relativ zum zweiten Bauteil begrenzt oder vermieden, jedoch ist das erste Bauteil noch nicht endgültig am zweiten Bauteil montiert. Dadurch ist es insbesondere auf einfache Weise möglich, ein beispielsweise elastisches Dichtungselement als Zwischenlage zwischen den Bauteilen anzuordnen. Nach dieser Anordnung des Dichtungselements kann schließlich das erste Bauteil am zweiten Bauteil endgültig montiert werden, indem beispielsweise das erste Schraubelement relativ zum zweiten Schraubelement gedreht und dadurch eingeschraubt und angezogen beziehungsweise festgezogen wird. Infolge dieses Festziehens werden die Bauteile beispielsweise miteinander verspannt, so dass sie unter gegenseitiger Kraftbeaufschlagung fest miteinander verbunden sind.

Dem Verfahren liegt somit insbesondere die Idee zugrunde, sowohl das zweite Schraubelement als auch das erste Schraubelement, das heißt die Befestigungseinrichtung insgesamt am zweiten Bauteil vorzumontieren, dann das erste Bauteil über die vormontierte Befestigungseinrichtung am zweiten Bauteil vorzufixieren und schließlich das erste Bauteil am zweiten Bauteil festzulegen, indem das erste Schraubelement mit dem zweiten Schraubelement verschraubt wird.

Die Verbindung des ersten Bauteils mit dem zweiten Schraubelement kann dabei auf besonders einfache, zeit- und kostengünstige Weise durch Verrasten, das heißt durch Verclipsen erfolgen, indem das erste Bauteil mittels des Rastelements mit dem zweiten Schraubelement verclipst beziehungsweise verrastet wird. Hierdurch ist eine schnell auszuführende Vorfixierung und Vorpositionierung darstellbar.

In vorteilhafter Ausgestaltung der Erfindung wird nach dem Verrasten des ersten Bauteils mit dem zweiten Schraubelement das erste Schraubelement in das zweite Schraubelement eingeschraubt, wodurch das zweite Schraubelement und das mit dem zweiten Schraubelement verrastete erste Bauteil auf das zweite Bauteil zubewegt werden. Dies bedeutet, dass durch das Einschrauben des ersten Schraubelements in das zweite Schraubelement eine Bewegung des zweiten Schraubelements und des ersten Bauteils relativ zum zweiten Bauteil bewirkt wird. Dadurch ist es beispielsweise möglich, das erste Bauteil zunächst in einer Vormontagestellung relativ zum zweiten Bauteil zu positionieren. In dieser Vormontagestellung kann zumindest ein Teilbereich des ersten Bauteils in einem vorgebbaren Abstand zu einem Teilbereich des zweiten Bauteils angeordnet sein. Durch diese Beabstandung ist es beispielsweise möglich, das genannte Dichtungselement als Zwischenlage zu montieren.

Wird dann anschließend das erste Schraubelement in das zweite Schraubelement eingeschraubt, so kann der Abstand verkleinert oder aufgehoben werden, da sich das erste Bauteil durch das Einschrauben des ersten Schraubelements in das zweite Schraubelement auf das zweite Bauteil zubewegt. Durch diese Bewegung wird das erste Bauteil beispielsweise aus der Vormontagestellung in eine Endmontagestellung bewegt, in der das erste Bauteil am zweiten Bauteil festgelegt ist. Dadurch ist eine besonders zeitgünstige Montage darstellbar, da das Festlegen des ersten Bauteils am zweiten Bauteil mit der Bewegung des ersten Bauteils aus der Vormontagestellung in die Endmontagestellung zeitgleich einhergeht.

Bei einer weiteren vorteilhaften Ausführungsform der Erfindung wird das erste Bauteil durch das Verrasten mit dem zweiten Schraubelement verdrehgesichert am zweiten Bauteil vormontiert. Mit anderen Worten ist nicht nur das zweite Schraubelement gegen eine Verdrehung relativ zum zweiten Bauteil gesichert, sondern auch das erste Bauteil ist gegen eine Drehung relativ zum zweiten Schraubelement gesichert. Dadurch kann vermieden werden, dass sich das erste Bauteil relativ zum zweiten Bauteil verdreht. Hierdurch ist eine definierte Ausrichtung in der Vormontagestellung darstellbar. Darüber hinaus kann vermieden werden, dass sich das erste Bauteil beim Bewegen aus der Vormontagestellung in die Endmontagestellung relativ zum zweiten Bauteil verdreht. In der Folge ist eine besonders einfache Handhabung der Bauteile im Rahmen der Montage realisierbar.

Um eine Befestigungsanordnung der im Oberbegriff des Patentanspruchs 4 angegebenen Art derart weiterzuentwickeln, dass sich eine besonders einfache Befestigung beziehungsweise Montage des ersten Bauteils am zweiten Bauteil realisieren lässt, ist es erfindungsgemäß vorgesehen, dass das erste Bauteil am zweiten Bauteil mittels der Befestigungseinrichtung in einer von der Endmontagestellung unterschiedlichen Vormontagestellung positionierbar ist, in welcher das erste Bauteil mittels des Rastelements mit dem zweiten Schraubelement verrastet und zumindest das zweite Schraubelement verdrehsicher über das erste Schraubelement am zweiten Bauteil gehalten ist. Vorteilhafte Ausgestaltungen des erfindungsgemäßen Verfahrens sind als vorteilhafte Ausgestaltungen der erfindungsgemäßen Befestigungsanordnung anzusehen und umgekehrt.

Bei der Befestigungsanordnung ist es vorgesehen, dass das erste Bauteil mittels der Befestigungseinrichtung am zweiten Bauteil zunächst vorpositioniert werden kann. In der Vormontagestellung ist das erste Bauteil bereits am zweiten Bauteil gehalten, wobei Relativbewegungen des ersten Bauteils zum zweiten Bauteil vermieden oder begrenzt sind. Dennoch befindet sich das erste Bauteil noch nicht in seiner Endmontagestellung. Dadurch ist es beispielsweise möglich, das erste Bauteil relativ zum zweiten Bauteil bereits zu positionieren beziehungsweise vorzupositionieren, jedoch noch anderweitige Montagevorgänge vornehmen zu können. Beispielsweise ist es besonders einfach möglich, ein elastisches Dichtungselement als Zwischenlage zwischen die Bauteile anzuordnen. Danach kann das erste Bauteil aus der Vormontagestellung in die Endmontagestellung bewegt und mittels der Befestigungseinrichtung endgültig am zweiten Bauteil festgelegt werden.

Als vorteilhaft hat es sich gezeigt, wenn das zweite Schraubelement in der Vormontagestellung relativ zum zweiten Bauteil verschiebbar ist. Durch diese Verschiebbarkeit kann das zweite Schraubelement über sein Rastelement besonders einfach mit dem ersten Bauteil verrastet werden, so dass dadurch das erste Bauteil besonders einfach vorfixiert beziehungsweise vorpositioniert werden kann.

Das erfindungsgemäße Verfahren und die erfindungsgemäße Befestigungsanordnung ermöglichen es, im Vergleich zu herkömmlichen Montagevorgängen Montageaufwände an Montagebändern durch Reduzierung der bereitzustellenden Verbindungselemente zu reduzieren. Ferner ist es möglich, das Verrasten beziehungsweise Verclipsen des zweiten Schraubelements mit dem ersten Bauteil sowie das Verschrauben der beiden Schraubelemente miteinander mittels eines Werkzeugs durchzuführen. Darüber hinaus ist eine besonders einfache Austauschbarkeit der Befestigungseinrichtung bei einer Beschädigung möglich, da die Befestigungseinrichtung mit den Bauteilen jeweils reversibel lösbar, das heißt zerstörungsfrei lösbar verbunden ist.

Das als sogenannte Clipmutter ausgebildete, zweite Schraubelement kann ferner bei einer Demontage des zweiten Bauteils am ersten Bauteil verbleiben, indem das zweite Schraubelement mit dem ersten Bauteil verrastet bleibt. Das Lösen des ersten Schraubelements vom zweiten Schraubelement beeinflusst diese Verrastung nicht oder nicht derart, das es zu einer Entrastung kommen würde

Zur Realisierung einer besonders festen Verbindung der Bauteile miteinander ist es bei einer weiteren Ausführungsform der Erfindung vorgesehen, dass das zweite Schraubelement in der Endmontagestellung auf Höhe des Rastelements und/oder auf einer dem zweiten Bauteil abgewandten Seite des ersten Bauteils am ersten Schraubelement abgestützt ist. Dadurch wird die Verrastung des ersten Bauteils mit dem Rastelement des zweiten Schraubelements durch das erste Schraubelement unterstützt, so dass die Gefahr, dass sich die Verrastung des ersten Bauteils mit dem zweiten Schraubelement löst, besonders gering gehalten werden kann.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ausschnittsweise eine schematische und perspektivische Explosionsansicht einer Befestigungsanordnung eines ersten Bauteils an einem zweiten Bauteil, bei welcher das erste Bauteil am zweiten Bauteil mittels einer Befestigungseinrichtung befestigt beziehungsweise zu befestigen ist, die ein erstes Schraubelement in Form einer Schraube und ein zweites Schraubelement in Form einer Clipmutter umfasst;
- Fig. 2a-c: jeweils ausschnittsweise eine schematische und geschnittene Seitenansicht der Bauteile und der Befestigungseinrichtung bei der Montage des ersten Bauteils am zweiten Bauteil;
- Fig. 3: ausschnittsweise eine schematische Perspektivansicht des zweiten Bauteils mit der am zweiten Bauteil vormontierten Befestigungseinrichtung;
- Fig. 4: ausschnittsweise eine schematische Perspektivansicht der Befestigungsanordnung und
- Fig. 5: ausschnittsweise eine schematische Perspektivansicht des ersten Bauteils, an dem die Clipmutter durch Verrasten gehalten ist.

In den Fig. sind gleiche oder funktionsgleiche Elemente mit gleichen Bezugszeichen versehen.

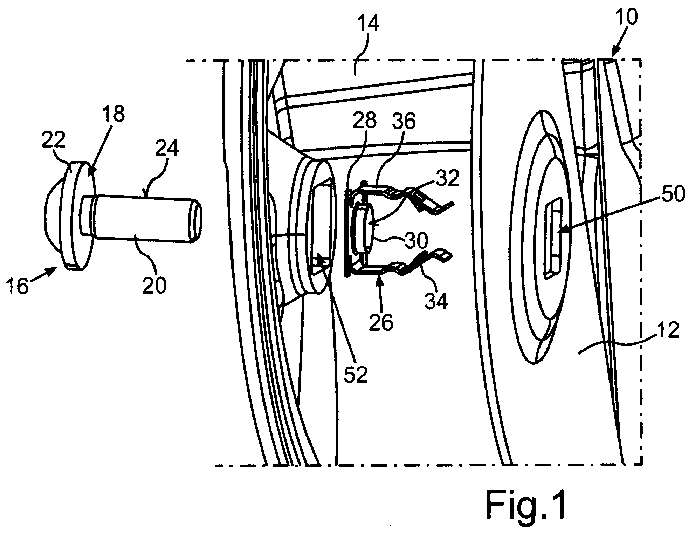

Fig. 1 zeigt in einer schematischen Explosionsansicht einen im Ganzen mit 10 bezeichnete Befestigungsanordnung, bei welcher ein erstes Bauteil 12 an einem zweiten Bauteil 14 eines beispielsweise als Personenkraftwagen ausgebildeten Kraftwagens befestigt beziehungsweise zu befestigen ist. Zum Befestigen des ersten Bauteils 12 am zweiten Bauteil 14 wird wenigstens eine im Ganzen mit 16 bezeichnete Befestigungseinrichtung verwendet. Die Befestigungseinrichtung 16 umfasst ein erstes Schraubelement in Form einer Schraube 18, welche einen Schraubenschaft 20 und einen Schraubenkopf 22 umfasst. Der Schraubenschaft 20 und der Schraubenkopf 22 sind miteinander verbunden und beispielsweise einstückig miteinander ausgebildet. Der Schraubenschaft 20 weist ein erstes Gewinde in Form eines Außengewindes 24 auf.

Die Befestigungseinrichtung 16 umfasst auch ein zweites Schraubelement in Form einer sogenannten Clipmutter 26. Die Clipmutter 26 ist beispielsweise einstückig ausgebildet und aus einem metallischen Werkstoff hergestellt. Die Clipmutter 26 weist einen Grundkörper 28 auf. Der Grundkörper 28 ist zumindest im Wesentlichen plattenförmig ausgebildet. Am Grundkörper 28 ist ein vom Grundkörper 28 abstehender Kragen 30 vorgesehen, welcher einstückig mit dem Grundkörper 28 ausgebildet ist. An einer innenumfangsseitigen Mantelfläche des Kragens 30 ist ein zweites Gewinde in Form eines mit dem Außengewinde 24 korrespondierenden Innengewindes 32 vorgesehen. Ferner stehen vom Grundkörper 28 Rastelemente in Form von Rastarmen 34, 36 der Clipmutter 26 ab.

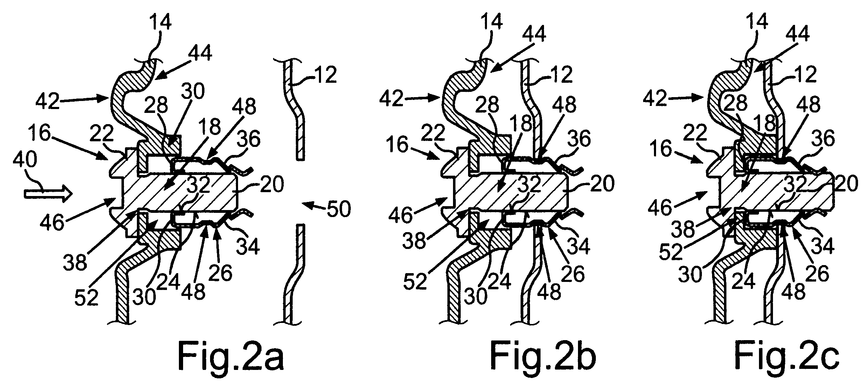

Anhand von Fig. 2a-c ist ein Verfahren zum Befestigen des ersten Bauteils 12 am zweiten Bauteil 14 mittels der Befestigungseinrichtung 16 veranschaulicht. Bei einem ersten Schritt des Verfahrens wird die Clipmutter 26 mittels der Schraube 18 am zweiten Bauteil 14 vormontiert, wobei die Clipmutter 26 relativ zum zweiten Bauteil 14 verschiebbar ist. Wie aus Fig. 2a erkennbar ist, weist das zweite Bauteil 14 eine Anbindungsgeometrie 37 mit einer Durchgangsöffnung 38 auf. Die Schraube 18 wird entlang einer in Fig. 2a durch einen Richtungspfeil 40 veranschaulichten Fügerichtung von einer ersten Seite 42 des zweiten Bauteils 14 her durch die Durchgangsöffnung 38 hindurch gesteckt. Die Clipmutter 26 wird auf einer der ersten Seite 42 abgewandten zweiten Seite 44 des zweiten Bauteils 14 angeordnet. Wie aus Fig. 2a erkennbar ist, wird die Schraube 18 über ihr Außengewinde 24 ein Stück in das korrespondierende Innengewinde 32 der Clipmutter 26 eingeschraubt. Zum Einschrauben der Schraube 18 in die Clipmutter 26 weist die Schraube 18 einen Werkzeugangriff 46 auf.

Das zweite Bauteil 14 kann mit der am zweiten Bauteil 14 vormontierten Befestigungseinrichtung 16 beispielsweise an eine Montagestelle angeliefert werden, wobei im Anschluss daran die Montage des ersten Bauteils 12 am zweiten Bauteil 14 über die Befestigungseinrichtung 16 erfolgt.

Aus Fig. 2b ist erkennbar, dass - nachdem die Clipmutter 26 am zweiten Bauteil 14 verschiebbar und verdrehgesichert vormontiert wurde - das erste Bauteil 12 mit der Clipmutter 26 mittels der Rastarme 34, 36 verrastet wird. Die Rastarme 34, 36 sind federnd am Grundkörper 28 gehalten und weisen jeweils eine Rastaufnahme 48 auf. Das erste Bauteil 12 weist eine Rastaufnahme in Form einer Durchgangsöffnung 50 auf, durch welche die Rastarme 34, 36 hindurch gesteckt werden, bis die Durchgangsöffnung 50 begrenzende Wandungen des ersten Bauteils 12 in der jeweiligen Rastaufnahme 48 angeordnet sind. Hierdurch wird die Clipmutter 26 in das erste Bauteil 12 eingeclipst, so dass das erste Bauteil 12 mit der Clipmutter 26 insbesondere formschlüssig verbunden ist.

Wie besonders gut aus Fig. 1, 4 und 5 erkennbar ist, ist die Durchgangsöffnung 50 zumindest im Wesentlichen als Rechteck ausgebildet und kann gegebenenfalls abgerundete Ecken aufweisen. Mit anderen Worten weicht die Form der Durchgangsöffnung 50 von einem Kreis ab. Hierdurch ist eine Verdrehsicherung geschaffen, so dass die Clipmutter 26 nicht relativ zum ersten Bauteil 12 gedreht werden kann beziehungsweise umgekehrt. Dies bedeutet, dass das erste Bauteil 12 durch das Verrasten mit der Clipmutter 26 zunächst verdrehgesichert am zweiten Bauteil 14 in einer aus Fig. 2b erkennbaren Vormontagestellung vormontiert ist beziehungsweise wird. Dadurch, dass die Clipmutter 26 in der Vormontagestellung noch relativ zu dem zweiten Bauteil 14 verschiebbar ist, kann das erste Bauteil 12 auf besonders einfache Weise über die Rastarme 34, 36 mit der Clipmutter 26 verrastet werden.

Die Verdrehsicherung der Clipmutter 26 relativ zum Bauteil 14 ist ebenfalls durch unrunde Geometrien gebildet. Wie besonders gut aus Fig. 1, 2a bis c und 3 erkennbar ist, weist das zweite Bauteil 14 eine Aufnahme 52 auf, in welcher die Clipmutter 26 zumindest teilweise aufgenommen ist. Insbesondere ist der vorliegend zumindest im Wesentlichen rechteckförmige und somit unrunde Grundkörper 28 in der Aufnahme 52 aufgenommen. Auch die Aufnahme 52 ist unrund und vorliegend zumindest im Wesentlichen rechteckförmig ausgebildet, wobei eine Innenkontur zum Aufnehmen des Grundkörpers 28 mit einer entsprechenden Außenkontur des Grundkörpers 28 zumindest im Wesentlichen korrespondiert. Die Innenkontur der Aufnahme 52 und die Außenkontur des Grundkörpers 28 sind vorliegend als Vierkantgeometrien gegebenenfalls mit abgerundeten Ecken ausgebildet, wodurch die Clipmutter 26 gegen eine Verdrehung relativ zum zweiten Bauteil 14 gesichert ist.

Um das erste Bauteil 12 am zweiten Bauteil 14 festzulegen, wird die Schraube 18 weiter in die Clipmutter 26 eingeschraubt. Da sich die Clipmutter 26 nicht relativ zum zweiten Bauteil 14 drehen kann, wird eine beim Einschrauben durchgeführte Drehung der Schraube 18 relativ zur Clipmutter 26 in eine translatorische Bewegung der Clipmutter relativ zur Schraube 18 und relativ zum zweiten Bauteil 14 umgewandelt. Wie aus einer Zusammenschau von Fig. 2b und 2c erkennbar ist, wird die Clipmutter 26 durch das Einschrauben der Schraube 18 in die Clipmutter 26 auf das zweite Bauteil 14 zubewegt.

Da das erste Bauteil 12 bereits mit der Clipmutter 26 verrastet ist, bewegt sich das erste Bauteil 12 mit der Clipmutter 26 mit. Mit anderen Worten bewegt sich auch das erste Bauteil 12 beim Einschrauben der Schraube 18 in die Clipmutter 26 auf das zweite Bauteil 14 zu. Hierdurch wird das erste Bauteil 12 aus einer in Fig. 2b gezeigten Vormontagestellung in seine in Fig. 2c gezeigte Endmontagestellung bewegt, in der das erste Bauteil 12 am zweiten Bauteil 14 abgestützt ist.

In der Vormontagestellung ist eine gegenseitige Kraftbeaufschlagung der Bauteile 12, 14 vermieden. Dies bedeutet, dass zwar das erste Bauteil 12 am zweiten Bauteil 14 gehalten und derart vorpositioniert ist, dass eine Relativbewegung des ersten Bauteils 12 zum zweiten Bauteil 14 vermieden oder begrenzt ist, jedoch ist das erste Bauteil 12 noch nicht endgültig am zweiten Bauteil 14 montiert. Diese endgültige Montage erfolgt durch Festziehen der Schraube 18.

In der Vormontagestellung ist das erste Bauteil 12 im Vergleich zur Endmontagestellung weiter oder überhaupt vom zweiten Bauteil 14 beabstandet, jedoch bereits vom zweiten Bauteil 14 gehalten und somit vorpositioniert. Dadurch ist es auf besonders einfache Weise möglich, beispielsweise ein elastisches Dichtungselement als Zwischenlage zwischen die Bauteile 12, 14 anzuordnen.

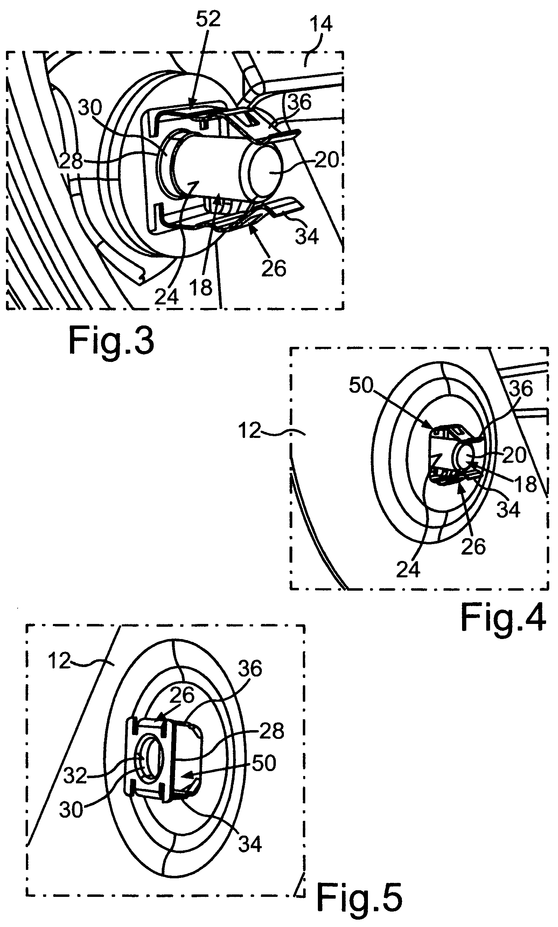

Wie besonders gut aus Fig. 2c erkennbar ist, ist die Clipmutter 26 auf der ersten Seite 42 des ersten Bauteils 12, insbesondere der jeweiligen Rastaufnahme 48, an der Schraube 18 abgestützt, da die Schraube 18 über ihr Außengewinde 24 in das am Kragen 30 vorgesehene Innengewinde 32 abgestützt ist. Ferner ist die Clipmutter 26 auch auf der zweiten Seite 44 des ersten Bauteils 12, insbesondere der jeweiligen Rastaufnahme 48, an der Schraube 18 beziehungsweise an deren Schraubenschaft 20 abgestützt, da die Rastarme 34, 36 am Schraubenschaft 20 anliegen. Mit anderen Worten ist die Clipmutter 26 beiderseits der jeweiligen Rastaufnahme 48 an der Schraube 18 abgestützt. Dadurch drückt der Schraubenschaft 20 in der Endmontagestellung die Rastarme 34, 36 gegen die die Durchgangsöffnung 50 des ersten Bauteils begrenzende Wandungen, so dass das erste Bauteil 12 besonders fest in der jeweiligen Rastaufnahme 48 aufgenommen ist. Diese Abstützung der Rastarme 34, 36 an dem Schraubenschaft 20 ist besonders gut aus Fig. 3 erkennbar.

Fig. 4 zeigt die Befestigungsanordnung 10. Wie aus Fig. 4 erkennbar ist, durchragen der Schraubenschaft 20 und die Rastarme 34, 36 die Durchgangsöffnung 50. Fig. 5 zeigt das erste Bauteil 12 mit der in das erste Bauteil 12 eingeclipsten Clipmutter 26. Daraus ist ersichtlich, dass das zweite Bauteil 14 vom ersten Bauteil 12 demontiert werden kann und umgekehrt, ohne die Clipmutter 26 vom ersten Bauteil 12 lösen zu müssen. Mit anderen Worten kann bei einer Demontage die Clipmutter 26 mit dem ersten Bauteil 12 verrastet bleiben.

Die Befestigungsanordnung 10 ist sowohl mit dem ersten Bauteil 12 als auch mit dem zweiten Bauteil 14 zerstörungsfrei lösbar, das heißt reversibel lösbar verbunden, so dass ein besonders einfacher Austausch beispielsweise im Reparaturfall darstellbar ist. Darüber hinaus ist eine besonders einfache Montage realisierbar, da beispielsweise das Einclipsen der Clipmutter 26 in das erste Bauteil 12 und das Verschrauben mittels eines einzigen Werkzeugs erfolgen kann. Darüber hinaus ist es nicht erforderlich, am ersten Bauteil 12 oder am zweiten Bauteil 14 Einpressmuttern oder dergleichen, nicht-zerstörungsfrei lösbare Verbindungselemente vorsehen zu müssen.

Die Befestigungseinrichtung 16 ist besonders vorteilhaft verwendbar bei Türen, insbesondere Seitentüren, mit Modulträgern aus Kunststoff, wobei ein Modulträger beispielsweise an einem aus Metall gebildeten Türinnenblech befestigt wird. Bei dem Modulträger handelt es sich beispielsweise um das zweite Bauteil 14, wobei es sich bei dem ersten Bauteil 12 um das Türinnenblech handeln kann.

### Bezugszeichenliste

- 10: Befestigungsanordnung
- 12: erstes Bauteil
- 14: zweites Bauteil
- 16: Befestigungseinrichtung
- 18: Schraube
- 20: Schraubenschaft
- 22: Schraubenkopf
- 24: Außengewinde
- 26: Clipmutter
- 28: Grundkörper
- 30: Kragen
- 32: Innengewinde
- 34: Rastarm
- 36: Rastarm
- 37: Anbindungsgeometrie
- 38: Durchgangsöffnung
- 40: Richtungspfeil
- 42: erste Seite
- 44: zweite Seite
- 46: Werkzeugangriff
- 48: Rastaufnahme
- 50: Durchgangsöffnung
- 52: Aufnahme

## Patentansprüche

1. Verfahren zum Befestigen eines ersten Bauteils (12) an einem zweiten Bauteil (14) eines Kraftwagens, bei welchem das erste Bauteil (12) am zweiten Bauteil (14) mittels wenigstens einer ein erstes Schraubelement (18) mit einem Außengewinde (24) und ein zweites Schraubelement (26) mit einem Innengewinde (32) aufweisenden Befestigungseinrichtung (16) befestigt wird, indem das zweite Schraubelement (26) durch Einschrauben des Außengewindes (24) in das Innengewinde (32) mittels des ersten Schraubelements (18) am zweiten Bauteil (14) befestigt und das erste Bauteil (12) mittels wenigstens eines Rastelements (34, 36) des zweiten Schraubelements (26) mit diesem verrastet wird,
**dadurch gekennzeichnet, dass**
das zweite Schraubelement (26) vor dem Verrasten des ersten Bauteils (12) an dem zweiten Bauteil (14) relativ zu diesem verschiebbar und verdrehgesichert mittels des ersten Schraubelements (18) vormontiert wird.

2. Verfahren nach Anspruch 1,
**dadurch gekennzeichnet, dass**
nach dem Verrasten des ersten Bauteils (12) mit dem zweiten Schraubelement (26) das erste Schraubelement (18) in das zweite Schraubelement (26) eingeschraubt wird, wodurch das zweite Schraubelement (26) und das mit dem zweiten Schraubelement (26) verrastete erste Bauteil (12) auf das zweite Bauteil (14) zu bewegt werden.

3. Verfahren nach einem der Ansprüche 1 oder 2,
**dadurch gekennzeichnet, dass**
das erste Bauteil (12) durch das Verrasten mit dem zweiten Schraubelement (26) verdrehgesichert am zweiten Bauteil (14) vormontiert wird.

4. Befestigungsanordnung (10) eines ersten Bauteils (12) an einem zweiten Bauteil (14) eines Kraftwagens, bei welcher das erste Bauteil (12) am zweiten Bauteil (14) in einer Endmontagestellung mittels wenigstens einer Befestigungseinrichtung (16) gehalten ist, welche wenigstens ein ein Außengewinde (24) aufweisendes erstes Schraubelement (18) und ein korrespondierendes, wenigstens ein Rastelement (34, 36) aufweisendes und mittels der ersten Schraubelements (18) am zweiten Bauteil (14) gehaltenes zweites Schraubelement (26) umfasst, in dessen Innengewinde (32) das erste Schraubelement (18) über dessen Außengewinde (24) eingeschraubt ist, wobei das erste Bauteil (12) mittels des Rastelements (34, 36) mit dem zweiten Schraubelement (26) verrastet ist,
**dadurch gekennzeichnet, dass**
das erste Bauteil (12) am zweiten Bauteil (14) mittels der Befestigungseinrichtung (16) in einer von der Endmontagestellung unterschiedlichen Vormontagestellung positionierbar ist, in welcher das erste Bauteil (12) mittels des Rastelements (34, 36) mit dem zweiten Schraubelement (26) verrastet und zumindest das zweite Schraubelement (26) verdrehgesichert über das erste Schraubelement (18) am zweiten Bauteil (14) gehalten ist.

5. Befestigungsanordnung (10) nach Anspruch 4,
**dadurch gekennzeichnet, dass**
das zweite Schraubelement (26) in der Vormontagestellung relativ zum zweiten Bauteil (14) verschiebbar ist.

6. Befestigungsanordnung (10) nach einem der Ansprüche 4 oder 5,
**dadurch gekennzeichnet, dass**
das zweite Schraubelement (26) in der Endmontagestellung auf Höhe des Rastelements (34, 36) und/oder auf einer dem zweiten Bauteil (14) abgewandten Seite (44) des ersten Bauteils (12) am ersten Schraubelement (18) abgestützt ist.

## Claims

1. A method for fastening a first component (12) to a second component (14) of a motor vehicle, wherein the first component (12) is fastened to the second component (14) by at least one fastening device (16) which has a first screw element (18) with an external thread (24) and has a second screw element (26) with an internal thread (32), in that the second screw element (26) is fastened to the second component (14) by screwing the external thread (24) into the internal thread (32) by means of the first screw element (18) and the first component (12) is locked with the second screw element by means of at least one locking element (34, 36) of the second screw element (26),
**characterised in that**
before the first component (12) is locked on the second component (14), the second screw element (26) is pre-assembled such that it is displaceable and is secured against twisting relative to the second component by means of the first screw element (18).

2. A method according to claim 1,
**characterised in that**
after the first component (12) has been locked with the second screw element (26), the first screw element (18) is screwed into the second screw element (26), as a result of which the second screw element (26) and the first component (12) locked with the second screw element (26) are moved towards the second component (14).

3. A method according to either claim 1 or claim 2,
**characterised in that**
the first component (12) is pre-assembled on the second component (14) in an anti-twist manner due to locking with the second screw element (26).

4. A fastening arrangement (10) of a first component (12) to a second component (14) of a motor vehicle, wherein the first component (12) is held on the second component (14) in a final assembly position by at least one fastening device (16) which comprises at least one first screw element (18), having an external thread (24), and a corresponding second screw element (26) which has at least one locking element (34, 36), is held on the second component (14) by the first screw element (18) and into the internal thread (32) of which the first screw element (18) is screwed by the external thread (24) thereof, wherein the first component (12) is locked with the second screw element (26) by means of the locking element (34, 36),
**characterised in that**
the first component (12) can be positioned on the second component (14) by the fastening device (16) in a pre-assembly position which differs from the final assembly position and in which the first component (12) is locked with the second screw element (26) by means of the locking element (34, 36) and at least the second screw element (26) is held on the second component (14) in an anti-twist manner by the first screw element (18).

5. A fastening arrangement (10) according to claim 4,
**characterised in that**
in the pre-assembly position, the second screw element (26) can be moved relative to the second component (14).

6. A fastening arrangement (10) according to either claim 4 or claim 5,
**characterised in that**
in the final assembly position, the screw element (26) is supported on the first screw element (18) at the level of the locking element (34, 36) and/or on a side (44), remote from the second component (14), of the first component (12).

## Revendications

1. Procédé de fixation d'un premier composant (12) sur un second composant (14) d'un véhicule automobile, selon lequel le premier composant (12) est fixé sur le second composant (14) au moyen d'au moins un dispositif de fixation (16) comprenant un premier élément fileté (18) comportant un filetage externe (24) et un second élément fileté (26) comportant un filetage interne (32) en fixant le second élément fileté (26) sur le second composant (14), en vissant le filetage externe (24) dans le filetage interne (32) au moyen du premier élément fileté (18) et en bloquant par encliquetage le second composant (12) avec le second élément fileté (26) au moyen d'au moins un élément d'encliquetage (34, 36) de cet élément,
**caractérisé en ce qu'**
avant le blocage par encliquetage du premier composant (12) sur le second composant (14) le second élément fileté (26) est prémonté de façon à pouvoir coulisser mais à être bloqué en rotation par rapport à celui-ci au moyen du premier élément fileté (18).

2. Procédé conforme à la revendication 1,
**caractérisé en ce qu'**
après le blocage par encliquetage du premier composant (12) avec le second élément fileté (26) le premier élément fileté (18) est vissé dans le second élément fileté (26) de sorte que le second élément fileté (26) et le premier composant (12) bloqué par encliquetage avec ce second élément fileté (26) soient déplacés sur le second composant (14).

3. Procédé conforme à l'une des revendications 1 et 2,
**caractérisé en ce que**
le premier composant (12) est prémonté en étant bloqué en rotation sur le second composant (14) par le blocage par encliquetage avec le second élément fileté (26).

4. Dispositif de fixation (10) d'un premier composant (12) sur un second composant (14) d'un véhicule automobile dans lequel le premier composant (12) est maintenu sur le second composant (14) dans une position de montage finale au moyen d'au moins un dispositif de fixation (16) qui comporte au moins un premier élément fileté (18) comprenant un filetage externe (24) et un second élément fileté correspondant (26) comprenant au moins un élément d'encliquetage (34, 36), maintenu sur le second composant (14) au moyen du premier élément fileté (18), et dans le filetage interne (32) duquel est vissé le premier élément fileté (18) par son filetage externe (24), le premier composant (12) étant bloqué par encliquetage avec le second élément fileté (26) au moyen de l'élément d'encliquetage (34, 36),
**caractérisé en ce que**
le premier composant (12) peut être positionné sur le second composant (14) au moyen du dispositif de fixation (16) dans une position de prémontage différente de la position de montage finale, dans laquelle le premier composant (12) est bloqué par encliquetage avec le second élément fileté (26) au moyen de l'élément d'encliquetage (34, 36), et, au moins le second élément de vissage (26) est maintenu sur le second composant (14) en étant bloqué en rotation par l'intermédiaire du premier élément fileté (18).

5. Dispositif de fixation (10) conforme à la revendication 4,
**caractérisé en ce que**
le second élément fileté (26) peut coulisser par rapport au second composant (14) dans la position de prémontage.

6. Dispositif de fixation (10) conforme à l'une des revendications 4 et 5,
**caractérisé en ce que**
dans la position de montage finale, le second élément fileté (26) s'appuie sur le premier élément fileté (18) au niveau de l'élément d'encliquetage (34, 36) et/ou sur un côté (44) du premier composant (12) situé à l'opposé du second composant (14).
